# EUROPEAN PATENT APPLICATION

(11) **EP 2 306 335 A1**
(43) Date of publication of application: **06.04.2011**
(21) Application number: 09275082.7
(22) Date of filing: 17.09.2009
(51) Int. Cl.: G06F 17/30

(54) **A method of inserting active content in a series of electronic presentation slides**

(71) Applicant: GMark Ltd, Shinfield Berkshire RG2 9DY (GB)
(72) Inventor: Garroch, Jamie, Shinfield, Berkshire RG2 9DY (GB)
(74) Representative: Johnstone, Douglas Ian

(57) **Abstract**

A method of inserting active content in a series of electronic presentation slides and a computer program, computer readable storage media and a computer for the same is disclosed, the method comprising the steps of providing an interface to enable a user to define a slide hierarchy and, based on a user defined slide hierarchy, automatically inserting in at least some of the slides active content for navigating between the slides.

## Description

### Field of Invention

This invention relates to a method of inserting active content in a series of electronic presentation slides and a computer program, computer readable storage media and a computer for the same.

### Background to Invention

Microsoft's PowerPoint ® and Open Office's Impress ® software applications provide a user with the ability to create electronic presentation slides and to display the slides in a slide show (a generally sequential, full screen presentation of the slides).

Often, there is a requirement for a presenter to deviate from the strict chronology of otherwise sequentially presented slides. For example, in response to a question from a recipient of the presentation, a presenter may wish to refer to an as yet unpresented slide. Given the inherently adhoc nature of this requirement, this is conventionally done by forwarding through a sequence of presentation slides until the desired slide is reached; or by quitting the slide show, selecting the desired slide and then restarting the slide show.

Microsoft PowerPoint ® enables a user to manually insert navigation controls as active content in a slide wherein, during the course of a slide show, the presenter may select such a control to deviate to a non-adjacent slide. This is generally possible where a presenter is able to anticipate such deviations and manually insert navigation controls in the relevant slides when composing the slides. Of course, not all such deviations are predictable and such manually insertion of navigation controls can be laborious.

### Summary of Invention

In accordance with a first aspect of the present invention, there is provided a method of inserting active content in a series of electronic presentation slides and a computer program, computer readable storage media and a computer for the same, the method comprising the steps of providing an interface to enable a user to define a slide hierarchy and, based on a user defined slide hierarchy, automatically inserting in at least some of the slides active content for navigating between the slides.

The inventor has realised that by defining a slide hierarchy (typically in the context of a tree / branch structure) and automatically inserting corresponding active content including controls for navigating, it is possible to generate an electronic presentation with which a presenter may deviate from sequential presentation of slides, and instead make ad hoc deviations without prior contemplation (i.e. after manually inserting manually insert navigation controls which such deviations were contemplated) and without the discontinuity of quitting and restarting a slideshow.

Furthermore, the presenter is able to present a short presentation from a much larger presentation, navigating accordingly, and thereby avoiding the need for a presenter to reduce the size of a presentation to a manageable number of slides beforehand.

For example, in relation to navigation from one slide to another slide of the same hierarchy level, the active content inserted in at least one slide may include controls for navigating to at least one non-adjacent slide of the same hierarchy level, the previous or next slide of the same hierarchy level or all related slides of the same hierarchy level.

In relation to navigation from one slide to another slide of a lower hierarchy level, the active content inserted in at least one slide may include controls for navigating to at least one related, non-adjacent slide of a lower hierarchy level or all related slides of a lower hierarchy level.

In relation to navigation from one slide to another slide of a higher hierarchy level, the active content inserted in at least one slide may include controls for navigating to at least one related, non-adjacent slide of a higher hierarchy level, all related slides of a higher hierarchy level, all slides of the highest hierarchy level or all slides of a higher hierarchy level.

As mentioned, the first aspect of the present invention enables a presenter to present a short presentation from a much larger presentation file. Furthermore, a presenter may wish to provide the recipients of that presentation with a copy of the slides that were presented, though perhaps not a copy of all of the slides from the much larger presentation file.

Therefore, in accordance with a second aspect of the present invention, there is provided a method of generating a new presentation file containing a plurality of electronic presentation slides from a reference presentation file containing a greater number of electronic presentation slides, the method comprising the step of monitoring the display of slides from the reference presentation file during a presentation slide show and generating a new presentation file composed of only those slides of the reference presentation file presented during the slide show.

In accordance with a third aspect of the present invention, there is provided a method of inserting active content in a series of electronic presentation slides and a computer program, computer readable storage media and a computer for the same, the method comprising the steps of retrieving slide identifiers of at least some of the slides and automatically inserting in at least some of the slides active content for navigating between the slides wherein the user selects from a list of the retrieved identifiers.

The inventor has realised that such an arrangement enables a presenter to readily jump between slides in an adhoc fashion. For example, from one slide, the user may select another slide from a dropdown list composed of any related slide (whether of the same, a higher or a lower hierarchy level) or from a dropdown list composed of all slides in the presentation.

### Brief Description of Drawings

The invention will now be described, by way of example only, with reference to the following figures in which:
Figure 1A illustrates a hierarchy of slides of a presentation;
Figure 1B illustrates the sequential presentation of the slides of the presentation of figure 1A in a slide show;
Figure 2 illustrates a graphical user interface which enables a user to define a hierarchy of slides; and
Figure 3 illustrates a slide of a presentation which has inserted therein hierarchical navigation controls for navigating from the slides to other non-adjacent slides.

### Detailed Description

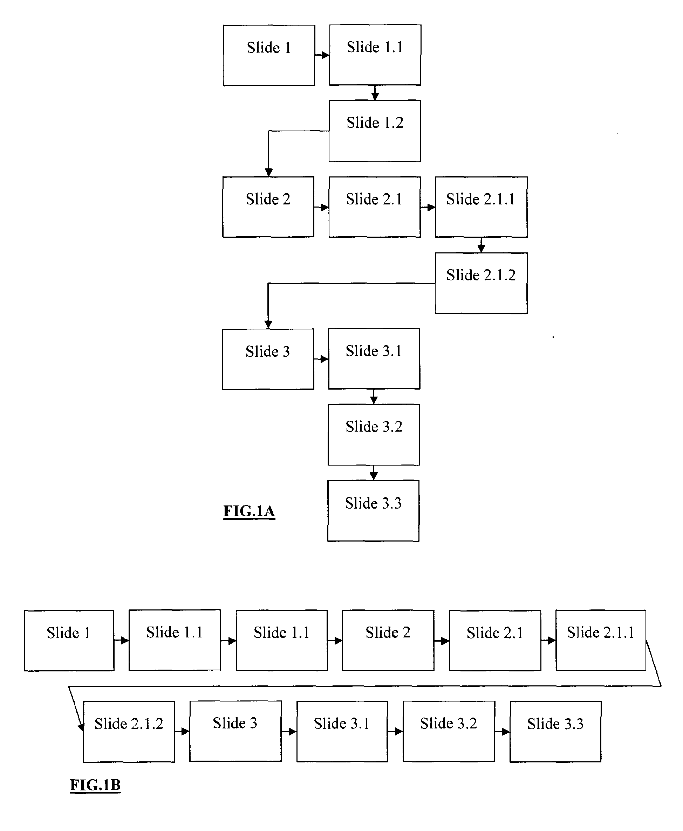

Referring to figure 1A, slides of a presentation are illustrated in respect of their hierarchy level. There are 11 slides in the presentation of which there are 3 top tier slides (slides 1, 2 and 3). These slides may, for example, correspond to the opening slides of 3 key topics covered in the presentation. There are 6 second tier slides (slides 1.1, 1.2, 2.1, 3.1, 3.2 and 3.3). These slides may, for example, correspond to the opening slides of subtopics relating to the 3 key topics covered in a presentation. Lastly, there are 2 lower tier (slides 2.1.1 and 2.1.2). These slides may, for example, correspond to detailed information relating to the subtopics introduced on slide 2.1.

In figure 1B, the slides of a presentation of figure 1 are illustrated as they would be sequentially presented in a slide show.

In accordance with the first aspect of the present invention, a computer program is provided, suitably configured such that a user is able to define a hierarchy of slides so that, based on a user defined slide hierarchy, active content can be automatically inserting the slides for navigating therebetween. Such a software application could conveniently be provided in the form of a plug-in or macro operable within the confines of an overarching presentation software application. For example, in respect of Microsoft PowerPoint®, such functionality could readily be provided as an Office VBA add-in.

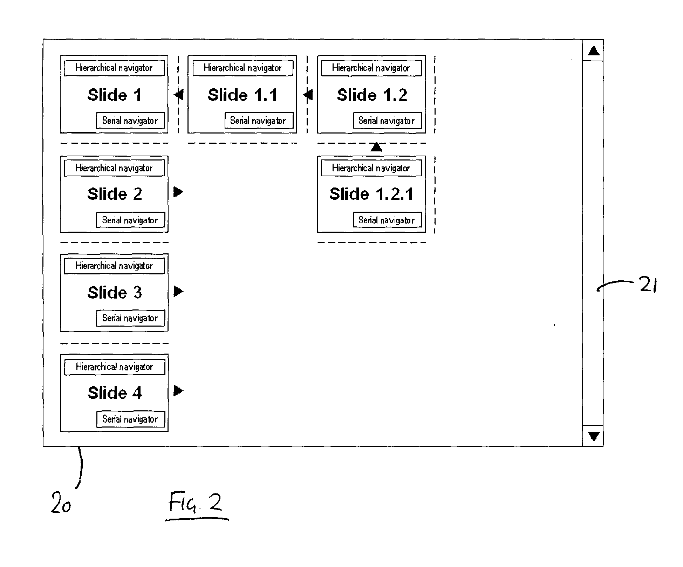

Figure 2 illustrates a screen shot of a graphical user interface of such a computer program. The user interface is provided with a window 20 in which a user may manipulate representations of the slides in order to create a hierarchy. The dotted lines indicate possible cursor placement (or drag and drop selection) for new hierarchical slide insertion. The arrows are active and selection thereof provides for expansion (i.e. show slides) / contraction (i.e. hide slides) to enable a user to define an extensive hierarchy in a lengthy slide show composed of many slides within the limitation of the screen size. A vertical scroll bar 21 is provided for the same reason.

Once a slide hierarchy is defined, such a such a computer program is able to automatically insert active content in to the slides to facilitate the hierarchical navigation.

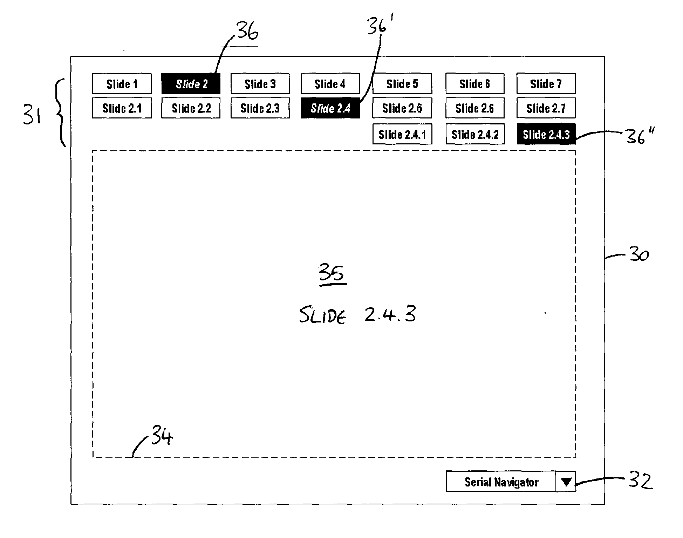

One such slide 30 is shown in figure 3. The hierarchical navigation is inserted in the top portion 31 of the slide with a frame 34 provided for the remainder of the slide content 35. More specifically, controls for navigation include appropriately labelled buttons (which could equally be hyperlinks) for all of the top tier slides (slides 1, 2, 3, 4, 5, 6 and 7), all of the second tier slides (2.1, 2.2, 2.3, 2.4, 2.5, 2.6 and 2.7) and related third tier slides (2.4.1 and 2.4.2). The controls 36, 36', 36" for slide 2.4.3 and related higher tier slides 2 and 2.4 are distinguished from the controls for other slides.

In the course of a presentation, a user would be able to move the cursor over any such control and effect navigation to a desired slide without having to forward through a sequence of undesired presentation slides until the desired slide is reached and without quitting the slide show, selecting the desired slide and then restarting the slide show.

The computer program further inserts in to each slide a serial navigation tool 32. This is a drop-down list control (list not shown) which enables a user to select any of the slides in the present presentation by reference to an identifier (e.g. the slide number, title or name). Note, specific to Microsoft PowerPoint ® is the use of both "titles" and "names". Titles are the header associated with a slide and presented as part of a slide show. Names are attributes associated with slides which are not presented as part of a slide show and generally not used. However, it is possible to use the name attribute of a slides to create a bespoke identifier for that slide which can be used by the serial navigation tool. For example, one might want to use abbreviated forms of the titles of slides in the serial navigation tool and the name attribute of a PowerPoint ® slide can be used to effect this.

Lastly, the computer program may monitor the display of slides during a presentation slide show and provide the user with an option to create a new presentation file composed of only those slides that were presented during the slide show. As previously mentioned, the first aspect of the present invention enables a presenter to present a short presentation from a much larger presentation file and it may, on occasion, be desirable to provide the recipients of the presentation will a copy of the slides that were presented (though perhaps not all of the slides from the much larger presentation file that could have been presented but which were omitted from the slide show by the presenter making certain navigation decisions during the slide show).

## Claims

1. A method of inserting active content in a series of electronic presentation slides comprising the steps of:
- providing an interface to enable a user to define a slide hierarchy; and
- based on a user defined slide hierarchy, automatically inserting in at least some of the slides active content for navigating between the slides.

2. A method according to claim 1 wherein the active content inserted in at least one slide includes controls for navigating to at least one non-adjacent slide of the same hierarchy level.

3. A method according to claim 2 wherein the active content inserted in at least one slide includes controls for navigating to the previous or next slide of the same hierarchy level.

4. A method according to claim 2 wherein the active content inserted in at least one slide includes controls for navigating to all related slides of the same hierarchy level.

5. A method according to any preceding claim wherein the active content inserted in at least one slide includes controls for navigating to at least one related, non-adjacent slide of a lower hierarchy level.

6. A method according to claim 5 wherein the active content inserted in at least one slide includes controls for navigating to all related slides of a lower hierarchy level.

7. A method according to any preceding claim wherein the active content inserted in at least one slide includes controls for navigating to at least one related, non-adjacent slide of a higher hierarchy level.

8. A method according to claim 7 wherein the active content inserted in at least one slide includes controls for navigating to all related slides of a higher hierarchy level.

9. A method according to any preceding claim wherein the active content inserted in at least one slide includes controls for navigating to all slides of the highest hierarchy level or all slides of a higher hierarchy level.

10. A method generating a new presentation file containing a plurality of electronic presentation slides from a reference presentation file containing a greater number of electronic presentation slides, the method comprising the step of:
- monitoring the display of slides from the reference presentation file during a presentation slide show; and
- generating a new presentation file composed of only those slides of the reference presentation file presented during the slide show.

11. A method according to claim 10 wherein at least some of the slides of the reference presentation file contain automatically inserted active content for navigating between slides.

12. A method of inserting active content in a series of electronic presentation slides comprising the steps of:
- retrieving identifiers of at least some of the slides; and
- automatically inserting in at least some of the slides active content for navigating between the slides wherein the user selects from a list of the retrieved identifiers.

13. A computer program comprising instructions for performing a method as claimed in any of the accompanying claims.

14. A computer readable storage media having recorded thereon instructions for performing a method as claimed in any of claims 1 to 12.

15. A computer configured to perform a method as claimed in any of claims 1 to 12.
